(19) Europäisches Patentamt
European Patent Office
Office européen des brevets

(11) **EP 1 898 075 A1**

(12) **DEMANDE DE BREVET EUROPEEN**

(43) Date de publication:
**12.03.2008 Bulletin 2008/11**

(51) Int Cl.:
*F02D 35/02* (2006.01)    *F02D 41/14* (2006.01)
*G01L 23/22* (2006.01)

(21) Numéro de dépôt: **07290920.3**

(22) Date de dépôt: **20.07.2007**

(84) Etats contractants désignés:
**AT BE BG CH CY CZ DE DK EE ES FI FR GB GR
HU IE IS IT LI LT LU LV MC MT NL PL PT RO SE
SI SK TR**
Etats d'extension désignés:
**AL BA HR MK YU**

(30) Priorité: **28.08.2006 FR 0607602**

(71) Demandeur: **IFP**
**92852 Rueil-Malmaison Cédex (FR)**

(72) Inventeurs:
• **Ker, Stephan**
**78400 Chatou (FR)**
• **Duval, Laurent**
**92000 Nanterre (FR)**

(54) **Methode d'estimation en temps-reel d'indicateurs de l'etat de la combustion d'un moteur a combustion interne**

(57)    - Méthode d'estimation en temps réel d'indicateurs de l'état de la combustion moteur à partir de signaux contenant des composantes oscillantes.
- On acquiert selon le temps ou l'angle vilebrequin un signal, vibratoire par exemple, corrélé avec la combustion du moteur. On réalise en temps réel le filtrage et l'analyse temps-fréquence de ce signal et l'on estime en temps réel à partir de cette analyse des indicateurs de l'état de la combustion.
- Application notamment au contrôle de la combustion d'un moteur à combustion interne.

FIG. 2

## Description

La présente invention concerne une méthode d'estimation en temps réel d'indicateurs de l'état de la combustion d'un moteur à combustion interne équipé d'un ou plusieurs capteurs.

Selon l'invention, l'estimation d'indicateurs de l'état de la combustion, peut être utilisée dans le cadre du contrôle de la combustion d'un moteur à combustion interne, en modifiant les paramètres moteurs suivant l'évolution des indicateurs issus de cette méthode.

Les normes de réduction des émissions polluantes des véhicules ont conduit à une adaptation progressive des technologies moteur se manifestant par l'introduction d'actionneurs supplémentaires (vanne de recirculation des gaz d'échappement, injection directe électronique, turbine à géométrie variable) et de nouveaux modes de combustion (la combustion Diesel homogène ou la combustion essence stratifiée). Dans ce contexte, le moteur est devenu un assemblage de systèmes complexes qui nécessite une gestion par des techniques modernes de l'automatique. La fonction du contrôle moteur consiste à gérer les actionneurs disponibles afin de garantir les performances du moteur tout en satisfaisant les contraintes environnementales. Un aspect fondamental du contrôle moteur réside dans l'asservissement de la combustion via un pilotage précis des conditions thermodynamiques dans le cylindre (température, pression de suralimentation, composition du mélange admis) et du réglage des paramètres d'injection.

## État de la technique

Les nouveaux modes de combustion, tels que la combustion Diesel homogène, sont beaucoup moins polluants que les combustions classiques (essence ou Diesel) mais elles sont en contrepartie beaucoup plus sensibles aux conditions de fonctionnement. Elles impliquent donc un investissement supplémentaire en terme de régulation. Le contrôle bouclé de la combustion n'est possible que si l'on dispose d'informations relatives au déroulement de la combustion et sur lesquels il est possible d'agir par le biais des actionneurs disponibles. Ces informations (indicateurs) peuvent êtres issues de la mesure directe de la pression dans la chambre de combustion à l'aide d'un capteur spécifique. Cette méthode permet d'accéder directement à des indicateurs physiques de la combustion, mais la durée de vie et le coût de ce type de capteurs n'autorisent pas encore de mise en série sur véhicule. A l'heure actuelle, il est plus réaliste de s'orienter vers des techniques alternatives telles que l'estimation des indicateurs de l'état de la combustion à partir de mesures non intrusives. Voici, une synthèse des méthodes existantes :

Interprétation du courant d'ionisation : Le principe consiste à mesurer le courant d'ionisation généré pendant la combustion. Lors de la combustion, certaines réactions chimiques occasionnent des dégagements d'ions. Leur production est influencée par les conditions de température et de pression dans le cylindre. Pour les détecter, la bougie est alimentée en permanence par une tension de faible amplitude. Le courant d'ionisation contient de l'information sur les phases successives de la combustion : l'allumage, la propagation du front de flamme et une phase associée aux variations de la pression et de la température en fin de réaction. Eriksson et Nielsen ont montré dans le document suivant par exemple, que la pression maximale au cours d'un cycle et son argument sont identifiables en interprétant le courant d'ionisation :

- L. Eriksson, Spark advance modeling and control, Ph.D. thesis, Linkôping University, Sweden, 1999.

Analyse de la vitesse de rotation instantanée du vilebrequin : La vitesse est mesurée à l'aide d'un encodeur monté à l'une des extrémités du vilebrequin. La pression cylindre est reconstruite par inversion de la chaîne cinématique du moteur, le modèle de celle-ci étant bien évidement connu. On peut par exemple se référer au document suivant :

- S. J. Citron, J. E. O'Higgins & L. Y. Chen, Cylinder by cylinder engine pressure and pressure torque waveform determination utilizing speed fluctuations, SAE Paper (1989), no. 890486.

Reconstruction à partir des mesures des vibrations du moteur :

Les vibrations d'un moteur à combustion interne peuvent être mesurées à l'aide d'un capteur, appelé accéléromètre ou d'un capteur de cliquetis, monté sur le moteur. On rappelle qu'un accéléromètre est un capteur qui, dans un système de référence donné, mesure l'accélération du corps auquel il est fixé (ou une de ses composantes) et d'étudier les chocs et les vibrations en résultant. L'extraction d'indicateurs de l'état de la combustion cohérents à partir d'un accéléromètre est rendue difficile par la nature du signal délivré. En effet, celui-ci ne contient pas uniquement des informations relatives à la combustion car la réponse vibratoire du moteur est aussi due à d'autres événements tels que le claquement des injecteurs, le retournement du piston au point mort haut, les vibrations induites par le système de distribution, etc.

L'utilisation de capteurs de type accéléromètre pour estimer la pression cylindre est une technique connue. On peut citer par exemple les documents suivants, dans lesquels, à partir du signal issu de l'accéléromètre, on essaie d'estimer la pression cylindre :

- Y. Gao & R. B. Randall, Reconstruction of Diesel engine cylinder pressure using a time domain smoothing technique, Mechanical Systems and Signal Processing 13 (1999), no. 5, 709-722.

- H. Du, L. Zhang & X. Shi, Reconstructing cylinder pressure from vibration signals based on radial basis function networks, Proceedings of the Institution of Mechanical Engineers, Part D 215 (2001), 761-767.

- R. Johnsson, Cylinder pressure reconstruction based on complex radial basis function networks from vibration and speed signals. Mechanical Systems and Signal Processing, 2006.

Du *et al.* traitent le problème d'estimation de la pression cylindre par le biais de techniques de traitement du signal faisant appel à la déconvolution ou au filtrage inverse. Ils ont démontré la capacité d'un réseau de neurones à réaliser une approximation de la fonction de transfert non linéaire entre l'évolution de la pression cylindre et le signal vibratoire généré. Johnsson utilise une méthode similaire suivant laquelle le signal issu de l'accéléromètre est combiné au signal de régime moteur pour reconstruire le signal de pression et les indicateurs de l'état de la combustion à l'aide d'un réseau de neurones dont les entrées sont des variables imaginaires.

D'autres méthodes utilisant des capteurs accélérométriques pour contrôler la combustion d'un moteur sont également connues :

Par le brevet EP1116946, on connaît une méthode et un système de contrôle de la combustion à partir de signaux issu d'un accéléromètre selon laquelle le signal mesuré est fenêtre (période d'occurrence de la combustion). Ce signal est ensuite traité pendant chaque boucle de contrôle, et il est comparé à un signal de référence afin de déterminer les modifications à apporter aux indicateurs de l'état de la combustion. Le traitement du signal issu de l'accéléromètre comprend trois étapes principales : une rectification, un filtrage et une intégration.

La demande de brevet US2004267430 (WO05001263) décrit un procédé de traitement de signaux accélérométriques issus des vibrations d'un moteur à combustion interne. En particulier, les signaux sont filtrés par des filtres spectraux et la courbe d'analyse de combustion est reconstruite par déconvolution d'une fonction de transfert identifiée à partir d'une base de données expérimentale. Il en résulte alors une estimation des indicateurs de l'état de la combustion permettant le contrôle de la combustion. Par exemple, le paramètre appelé SoC (Start of Combustion) est estimé à partir d'un polynôme fonction du dégagement d'énergie, de son angle maximal et de la pression de suralimentation.

Le brevet DE19536110 (FR 2739414) décrit un procédé de traitement de signaux accélérométriques issues des vibrations pour le contrôle de la combustion d'un moteur Diesel. En particulier, les signaux sont filtrés dans deux bandes de fréquences différentes. La première bande de fréquence [10 kHz, 30 kHz] permet d'extraire des composantes associées à l'injection à l'aide d'un dispositif de seuillage. La seconde bande de fréquence [0.5 kHz, 4 kHz] permet d'extraire les composantes du signal engendrées par la combustion en utilisant une méthode de seuillage identique.

Le brevet US 6546328 décrit une méthode qui utilise une transformée en ondelettes (*wavelet transform*), permettant a priori de localiser des indicateurs de l'état de la combustion comme la méthode proposée.

Le brevet FR 2834789 décrit un procédé de traitement du signal de cliquetis. La méthode proposée consiste à adapter la fréquence d'échantillonnage d'acquisition au régime moteur. Une transformée de Fourier est calculée pour les différents groupes de valeur d'échantillonnage pour une fréquence d'intérêt. Les informations sur la combustion résultent de la sommation des résultats des transformées de Fourier.

L'utilisation de transformée de Fourier est largement utilisée dans de nombreux domaines y compris dans le traitement de données accélérométriques associées au diagnostique et au contrôle moteur. Parmi la littérature récente on peut citer le brevet US 6388444 qui décrit l'utilisation de tels outils pour détecter des ratés de combustion (*misfires*), le brevet US 6456927 ou la demande US 2004/0162668 qui décrit l'utilisation de transformée de Fourier pour la détection du cliquetis. Ces brevets s'appuient sur un fenêtrage du signal accélérométrique (*windowing*), un filtrage passe-bande (*band pass filtering,* comme par exemple dans la demande US 2006/0085119). L'usage à des fins de contrôle pour les moteurs diesel ou à essence est également connu par le brevet US 6976936, par exemple.

Après des prétraitements, la transformée de Fourier peut être utilisée sous forme de Transformée de Fourier Rapide (FFT), algorithme rapide connu des spécialistes, calculée sur l'ensemble des échantillons, dont on tire des indicateurs, grâce à un calcul faisant intervenir l'amplitude ou l'énergie de composantes du spectre de Fourier ainsi calculé, et parfois une intégration de l'amplitude ou de l'énergie (US 2006/0085119).

Une autre méthode, décrite dans la demande US 2004/0267430 utilise une variante de la transformée de Fourier, la décomposition spectrale (faisant intervenir plusieurs FFT) pour extraire un paramètre, appelé SOC (*start of combustion*) après intégration d'un signal accélérométrique filtré. Ce dernier calcule au préalable une moyenne sur différents cycles acquis. Un autre exemple d'usage de la décomposition spectrale pour reconstruire un signal de pression à partir d'un signal accélérométrique est donné dans le brevet US 6408819.

Les indicateurs issus des précédentes approches ne sont pas exploitables directement pour des applications liées au diagnostic et au contrôle des moteurs à combustion interne. Ces méthodes reposent sur une intégration temporelle d'un signal issu d'un accéléromètre. Le traitement du signal issu de l'accéléromètre ne s'effectue pas en temps réel. De plus, ces méthodes dépendent fortement de la nature de la combustion et/ou de la technologie du capteur utilisé. Leur champ d'application est donc restreint.

La méthode selon l'invention permet d'estimer en temps réel des indicateurs de déroulement de la combustion d'un moteur à combustion interne équipé d'un ou plusieurs capteurs, quelque soit la technologie de capteur utilisé et quelque soit la nature de la combustion.

**La méthode selon l'invention**

L'invention concerne une méthode pour déterminer des indicateurs de l'état de la combustion d'un moteur à combustion interne, dans laquelle on acquiert sous forme d'une série d'échantillons un signal corrélé au phénomène de combustion. Au cours de cette méthode, on détermine une bande de fréquence corrélée avec la combustion en réalisant une analyse temps-fréquence du signal, et on sélectionne un nombre $k$ de fréquences appartenant à cette bande de fréquence. La méthode comporte les étapes suivantes :

a) après acquisition d'une première séquence de $N$ premiers échantillons $[n_1,...n_N]$:

- on filtre ladite première séquence dans ladite bande de fréquence, à l'aide d'un filtre passe bande ;

- on estime au moins $k$ composantes spectrales de ladite première séquence ainsi filtrée en effectuant une transformée de Fourier discrète de la première séquence filtrée ;

b) puis, à chaque nouvel échantillon $n_{N+1}$,

- on construit une nouvelle séquence de $N$ échantillons $[n_2,.....n_{N+1}]$, constituée des échantillons de la dite première séquence à l'exception du premier échantillon $n_1$ et avec en plus ledit nouvel échantillon $n_{N+1}$ ;

- on filtre ladite nouvelle séquence dans ladite bande de fréquence, à l'aide d'un filtre passe bande récursif ;

- on estime au moins $k$ composantes spectrales de ladite nouvelle séquence ainsi filtrée, à l'aide d'une transformée de Fourier discrète de la nouvelle séquence filtrée, calculée en appliquant la propriété de décalage circulaire de ladite transformée de Fourier ;

c) on détermine des indicateurs de l'état de la combustion à partir desdites composantes spectrales estimées.

Selon la méthode, on peut déterminer les indicateurs de l'état de la combustion après acquisition d'un nombre $p$ de séquences, à partir des étapes suivantes :

- on définit, pour chaque séquence, une valeur combinant les composantes spectrales ;

- on détermine un extremum des $p$ valeurs combinant les composantes spectrales des $p$ séquences ;

- on détermine lesdits indicateurs de l'état de la combustion à partir dudit extremum.

Dans ce cas, on peut utiliser comme valeur de combinaison des composantes spectrales la somme de l'énergie des composantes spectrales d'une séquence.

Selon l'invention, on peut acquérir le signal en fonction du temps ou en fonction de l'angle vilebrequin, et généralement le nombre $k$ de fréquences sélectionnées est compris entre 1 et 10. Pour la méthode, différents types de signaux peuvent être utilisés :

- signal vibratoire acquis à l'aide d'un capteur de vibration placé dans ledit moteur.
- pression au sein de cylindres du moteur acquis à l'aide de capteurs de pression placés dans ledit moteur.
- signal de courant d'ionisation.

Les indicateurs de l'état de la combustion peuvent représenter au moins l'un des phénomènes suivants : le début du phénomène oscillant associé à la phase de combustion, la fin du phénomène oscillant associé à la phase de combustion, le barycentre énergétique du phénomène oscillant, la magnitude du phénomène oscillant.

Enfin, on peut contrôler la combustion d'un moteur en modifiant des paramètres moteurs en fonction de ces indicateurs de l'état de la combustion.

D'autres caractéristiques et avantages de la méthode selon l'invention, apparaîtront à la lecture de la description ci-après d'exemples non limitatifs de réalisations, en se référant aux figures annexées et décrites ci-après.

**Présentation succincte des figures**

- la figure 1 montre le schéma du principe du contrôle bouclé de la combustion selon l'invention.

- la figure 2 montre une extraction des indicateurs basée sur la détermination du maximum du phénomène temps-fréquence associé à la combustion.

- la figure 3 illustre les quatre indicateurs obtenus : en trait continu, les indicateurs extraits à partir du signal de pression ; en pointillé, ceux obtenus à partir du signal accélérométrique.

**Description détaillée de la méthode**

La méthode selon l'invention est exposée dans le cadre d'un mode de réalisation particulier : le traitement de signaux contenant des composantes oscillantes. Dans ce mode de réalisation particulier, on s'attache à décrire la méthode appliquée à un cylindre unique sans intégrer de particularismes associés au mode de combustion du moteur (Diesel, Diesel LTC [Low Temperature Combustion] ou HCCI [Homogenous Charge Compression Ignition], essence, essence fonctionnant en mode stratifié, CAI [Controled Auto Ignition]) et à la technologie du ou des capteurs utilisés. La nature du moteur à combustion interne ainsi que la technologie du capteur utilisé, à partir du moment où le signal délivré contient des composantes oscillantes, n'influence pas le principe de la méthode.

La méthode permet de contrôler la combustion d'un moteur à combustion interne à partir d'un signal issu d'un capteur que l'on acquiert suivant le temps ou l'angle vilebrequin. Une partie du contenu fréquentiel de ce signal est associée à la variation de la pression au sein d'un cylindre lors du phénomène de combustion qui génère des vibrations, induisant des oscillations dans le signal acquis. La méthode permet de détecter en temps réel l'augmentation d'amplitude du contenu fréquentiel associé à la combustion. Ce contenu fréquentiel peut être isolé à l'aide d'un filtrage passe-bande et analysé à l'aide d'une représentation temps-fréquence afin de pouvoir accéder via le phénomène oscillant analysé à des informations sur le déroulement de la combustion.

Afin de pouvoir réaliser cette analyse temps-fréquence en temps réel, la méthode ne s'intéresse qu'à un nombre très limité de fréquences discrètes appartenant à la bande de fréquence d'intérêt. La méthode exploite la transformée de Fourier discrète et sa propriété de décalage circulaire afin de déterminer les composantes spectrales du signal en fonction du temps ou de l'angle vilebrequin. Cette analyse temps-fréquence fournit une distribution caractéristique des composantes spectrales, qui varie en fonction du temps ou de l'angle vilebrequin. La forme de cette distribution est exploitée afin d'extraire des indicateurs qualifiant le déroulement de la combustion.

Cette méthode peut s'appliquer dans le cadre du contrôle moteur en modifiant les paramètres moteurs suivant l'évolution des indicateurs issus de cette méthode et décrivant la combustion.

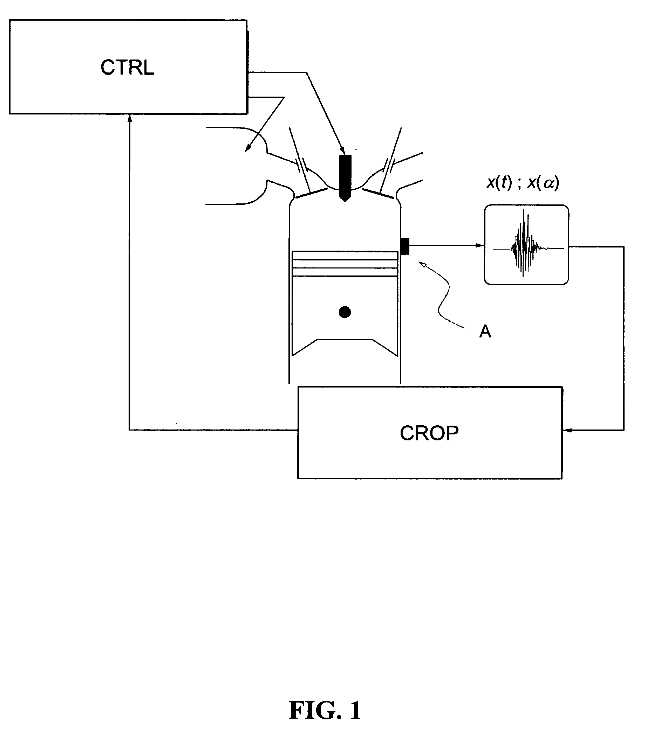

La figure 1 illustre le principe général de la méthode de contrôle bouclé de la combustion selon l'invention. Un signal $x$ contenant des composantes oscillantes (par exemple issu d'un capteur de pression industriel ou d'instrumentation, d'un capteur accélérométrique ou d'un capteur à courant d'ionisation) est acquis en fonction du temps, $x(t)$, ou en angle vilebrequin, $x(\alpha)$. Ce signal contient des composantes oscillantes dont les fréquences sont associées à l'évolution du gradient de pression au sein de la chambre de combustion lors du phénomène de combustion. La méthode consiste à analyser en temps réel l'évolution des composantes spectrales de ces fréquences selon le temps ou l'angle vilebrequin. La distribution de ces composantes spectrales permet d'extraire des indicateurs en temps réel qui vont servir pour contrôler la combustion. La méthode peut se décomposer en cinq étapes principales:

Étape préliminaire :

Étape 1- Identification de la bande de fréquence associée au phénomène de combustion

Étapes réalisées en temps réel :

Étape 2- Acquisition d'un signal $x$ à partir d'un capteur (A) selon le temps ou l'angle vilebrequin

Étape 3- Isolation d'une ou de plusieurs bandes de fréquence d'intérêt et détermination des composantes spectrales

Étape 4- Détermination d'indicateurs de l'état de la combustion (CROP), à l'aide de l'évolution des composantes spectrales

Étape 5- Contrôle moteur : Ajustement des paramètres du moteur pour réguler la combustion (CTRL)

Étape 1 : Identification de la bande de fréquence associée au phénomène de combustion.

Le phénomène de combustion, qui se caractérise par une évolution du gradient de la pression dans le cylindre, engendre des vibrations qui sont transmises au bloc, et qui peuvent être enregistrées à l'aide d'un capteur, par exemple un accéléromètre. Le contenu fréquentiel des oscillations enregistrées, associées aux phénomènes de combustion, dépend de plusieurs paramètres tels que la géométrie de la chambre et du type de combustion mais s'avère être situé dans une bande de fréquence généralement inférieure à 30000 Hz.

Le signal vibratoire issu de l'accéléromètre est une superposition de phénomènes ondulatoires. Parmi ces phénomènes, on peut citer la combustion, les injecteurs, le retournement du piston ou encore le bruit. Dans le but de séparer ces différents phénomènes, on réalise une analyse temps-fréquence qui permet de visualiser l'information contenue dans le signal contenant des composantes oscillantes avec une représentation en deux dimensions. Ces deux dimensions sont, d'une part le temps ou l'angle vilebrequin, et d'autre part, la variable duale de celles-ci qui est la fréquence, c'est-à-dire l'inverse du temps ou de l'angle vilebrequin. L'intérêt de cette représentation temps-fréquence est de pouvoir identifier un événement à partir de son contenu fréquentiel et de sa chronologie.

Selon la méthode, on réalise donc des acquisitions de signaux contenant des composantes oscillantes, par exemple un signal de vibration, et on effectue une analyse temps-fréquence afin de localiser précisément la bande de fréquence corrélée avec le phénomène de combustion.

En pratique, plusieurs types de représentation temps-fréquence sont utilisables afin d'étudier le signal vibratoire. On peut citer la représentation de type spectrogramme qui analyse le signal en réalisant une transformée de Fourier dans une fenêtre glissante, le long de l'axe des temps (ou des angles vilebrequin). On obtient ainsi l'évolution des composantes spectrales du signal en fonction du temps ou de l'angle vilebrequin. La visualisation de l'évolution de ces composantes est réalisée à l'aide d'un diagramme où est représenté le module des composantes spectrales. L'un des axes est le temps (ou l'angle vilebrequin) et l'autre est la variable duale, la fréquence.

On analyse par une même méthode un signal de référence et le signal de vibration utilisé selon l'invention. On repère les oscillations du signal de référence qui sont observables aussi sur le signal considéré. On effectue ce travail sur un ou plusieurs signaux représentatifs du phénomène de combustion, par exemple à plusieurs régimes, plusieurs charges, en fonction de nos connaissances sur les moteurs. A l'issue de ce travail d'analyse du signal vibratoire, le contenu fréquentiel associé à la combustion est ainsi déterminé, en combinant les connaissances données sur les paramètres physiques du moteur (notamment les dimensions de la chambre de combustion et la gamme de température du fonctionnement du moteur considéré) avec une analyse conjointe, suivant la représentation temps-fréquence considérée, entre le signal de référence (par exemple le signal de pression à l'intérieur de la chambre de combustion acquise avec le capteur approprié) et le signal acquis considéré (par exemple un signal de vibration).

Étape 2- Acquisition du signal contenant des composantes oscillantes selon le temps ou l'angle vilebrequin.

Cette étape, ainsi que les suivantes, sont réalisées en temps réel. La première phase temps réel de la méthode consiste à enregistrer le signal contenant des composantes oscillantes à l'aide d'un capteur (par exemple un accéléromètre situé sur le bloc moteur ou la culasse). La technologie du capteur importe peu, par contre il faut s'assurer que le capteur est bien adapté au signal contenant des composantes oscillantes que l'on souhaite enregistrer, c'est-à-dire qu'il possède une bande passante incluant le contenu fréquentiel recherché et qu'aucune distorsion majeure ne perturbe le signal.

Deux grandeurs sont à enregistrer : la première est le signal délivré par le capteur, la seconde est la valeur de l'angle vilebrequin en fonction du temps que l'on obtient à l'aide d'un codeur angulaire.

On choisit ensuite de travailler soit avec un échantillonnage en fonction du temps, soit avec un échantillonnage en fonction de l'angle vilebrequin. La méthode peut travailler indifféremment selon le temps ou l'angle vilebrequin, mais l'angle vilebrequin doit être obtenu dans les deux cas, afin de fournir in fine une datation angulaire, c'est-à-dire la conversion en valeur angulaire d'une partie des indicateurs fournis par la méthode proposée. Les valeurs angulaires obtenues sont utilisées à des fins de contrôle, soit de manière absolue, soit de manière relative 1) aux indicateurs obtenus lors des cycles de combustion précédents 2) à des cartographies. Ils sont utilisés en contrôle bouclé de la combustion, en modifiant les paramètres moteurs, dont certains sont spécifiés par une valeur angulaire (par exemple l'ouverture des injecteurs, ou l'action des valves d'échappement ou d'admission).

Étape 3- Isolation de la bande de fréquence d'intérêt et détermination des composantes spectrales.

Le signal est traité échantillon par échantillon pour assurer le fonctionnement en temps réel de la méthode. Cette étape se décompose en deux phases qui sont réalisées l'une après l'autre : un filtrage du signal et une analyse temps-fréquence.

*Filtrage du signal*

La première phase consiste à isoler la bande de fréquence d'intérêt, et notamment les composantes oscillantes associées au phénomène de combustion. Pour ce faire un filtre passe-bande récursif est utilisé. Un filtre passe-bande est principalement caractérisé par ses fréquences de coupures et son ordre. Pour pouvoir réaliser le filtrage passe-bande en temps réel, le filtre est appliqué dans le domaine des temps ou des angles. La formulation aux différences suivantes est utilisée :

$$a(1) * y(n) = b(1) * x(n) + b(2) * x(n-1) + ... + b(nb+1) * x(n-nb) - \\ a(2) * y(n-1) - ... - a(na+1) * y(n-na) \tag{1}$$

où

$x(n)$ est le signal d'entrée pour l'échantillon $n$.

$y(n)$ est le signal de sortie du filtre à l'échantillon $n$.

$a(1,...,nb)$ sont les pôles du filtre et $b(1,...,nb)$ sont les zéros du filtre.

Une description détaillée de ce type de filtrage peut être trouvée dans le document suivant : Oppenheim et Schafer, « Discrete-Time signal processing », 1989.

A titre d'exemple, un filtre de type Butterworth d'ordre 4 et de fréquences de coupure 500 Hz et 2500 Hz peut être utilisé. Un tel filtre linéaire possède un gain quasiment constant dans la bande passante désirée.

On peut également utiliser, en plus ou à la place des filtres linéaires, des filtres non-linéaires récursifs, plus robustes à certains types de bruits, comme le filtrage médian, décrit dans :

T. Nodes et N. Gallagher, « Median filters : Some modifications and their properties », IEEE Transactions on Acoustics, Speech and Signal Processing, vol. 30, n. 5, pp. 739-746, 1982,

ainsi que ses généralisations:

I. Shmulevich et al., « Output distributions of recursive stack filters », Signal Processing letters, vol. 6, no. 7, pp. 175-178, juillet 1999.

*Analyse temps-fréquence*

La seconde phase de cette étape consiste à réaliser l'analyse temps-fréquence du signal filtré afin de pouvoir suivre l'évolution des composantes spectrales selon le temps ou l'angle vilebrequin. Selon la méthode, on réalise une analyse temps-fréquence qui nécessite peu de calcul contrairement à celle utilisée à l'étape 1. En effet, on suit l'évolution des composantes spectrales d'un nombre très restreint de fréquences discrètes (typiquement de 1 à 10) appartenant à la bande de fréquence associée au phénomène de combustion considéré.

L'analyse temps-fréquence utilisée par la méthode est basée sur la transformée de Fourier discrète qui pour une fréquence $k$ et pour une séquence temporelle ou angulaire de $N$ échantillons fournis la composante spectrale $X(k)$ par la relation suivante :

$$X(k) = \sum_{n=0}^{N-1} x(n)e^{-2i\pi nk/N} \qquad (2)$$

Pour réaliser une analyse temps-fréquence, il faut décaler la fenêtre d'analyse du signal (c'est-à-dire les $N$ échantillons) d'un certain nombre d'échantillons, et effectuer à nouveau une transformée de Fourier discrète. On obtient ainsi une évolution en fonction des échantillons que l'on considère (qui sont soit dans le domaine des temps soit dans le domaine angulaire) des composantes spectrales.

Afin d'utiliser cette technique en temps réel, l'analyse est faite au fur et à mesure de l'acquisition des échantillons. Ceci est réalisé en exploitant l'une des propriétés de la transformée de Fourier discrète qui est la propriété de décalage circulaire. Cette propriété stipule que si la transformée de Fourier discrète d'une séquence d'échantillons est $X(k)$ alors la transformée de Fourier discrète de la même séquence mais décalée d'un échantillon est $X(k)e^{2i\pi k/N}$.

Ainsi à partir de la composante spectrale calculée pour la séquence de $N$ échantillons $[n_1,.....n_N]$ on peut déterminer la composante spectrale suivante de la séquence $[n_2,....n_{N+1}]$ par la formulation aux différences suivante :

$$X_k(n) = X_k(n-1)e^{2i\pi nk/N} - x(n-N) + x(n) \qquad (3)$$

*où* :

$Xk(n)$ est la nouvelle estimation de la composante spectrale.

$X_k(n-1)$ est l'estimation précédente de la composante spectrale.

$x(n-N)$ est le premier échantillon de la séquence servant à calculer $X_k(n-1)$.

$x(n)$ est le dernier échantillon de la nouvelle séquence à analyser ; il s'agit de l'échantillon qui vient d'être acquis, le dernier de la nouvelle séquence filtrée lors de la phase précédente.

Pour plus de détails concernant l'équation (3), on peut se référer au papier de Jacobsen E., Lyons Richard, "The sliding DFT", IEEE Signal Processing Magazine, pp74-80, March 2003.

En pratique, il faut attendre que les $N$ premiers échantillons soient acquis avant de pouvoir réaliser la première estimation de la composante spectrale selon l'équation (2), ensuite l'estimation des composantes spectrales se fait échantillon par échantillon à l'aide de l'équation (3).

Le nombre de fréquences discrètes est faible. Il dépend d'une part de la bande de fréquence associée à la combustion, de la fréquence d'échantillonnage du signal et du nombre $N$ de la fenêtre d'analyse considérée. Cette taille de la fenêtre conditionne la résolution de l'analyse temps fréquence. De manière générale une à trois fréquences discrètes sont nécessaires pour bien analyser le signal vibratoire.

Un atout de cette étape est de réaliser dans la même boucle le filtrage et l'analyse temps-fréquence du signal vibratoire, grâce à la formulation récursive du filtrage et de l'analyse temps-fréquence utilisée.

Dans le cas où plusieurs fréquences discrètes ont été sélectionnées, il peut être avantageux de synthétiser l'information issue de l'analyse temp-fréquence à l'aide d'une combinaison appropriée des valeurs des composantes spectrales de ces fréquences discrètes. A titre d'exemple on peut réaliser l'addition du module au carré de ces composantes. Cette addition représente la somme de l'énergie des composantes spectrales. Pour chaque fenêtre d'analyse, cette somme d'énergie est une valeur caractéristique des fréquences sélectionnées. De façon non limitative, on se place dans le cadre d'une synthèse de l'information par cette somme de l'énergie des composantes spectrales dans la suite de la description.

Étape 4 - Détermination à l'aide de l'évolution des composantes spectrales d'indicateurs de l'état de la combustion.

Ainsi, à chaque acquisition de nouvel échantillon, on calcule la somme de l'énergie des composantes spectrales. Après acquisition de *p* échantillons on obtient une courbe appelée distribution de la somme de l'énergie des composantes spectrales, comportant *p* valeurs. Cette distribution est estimée pour une fenêtre comprenant le phénomène de combustion d'un cylindre donné. La taille de cette fenêtre est par définition inférieure à la durée d'un cycle moteur. En d'autres termes le nombre *p* d'échantillons acquis, définit une fenêtre permettant de déterminer des indicateurs de l'état de la combustion au cours d'un cycle moteur.

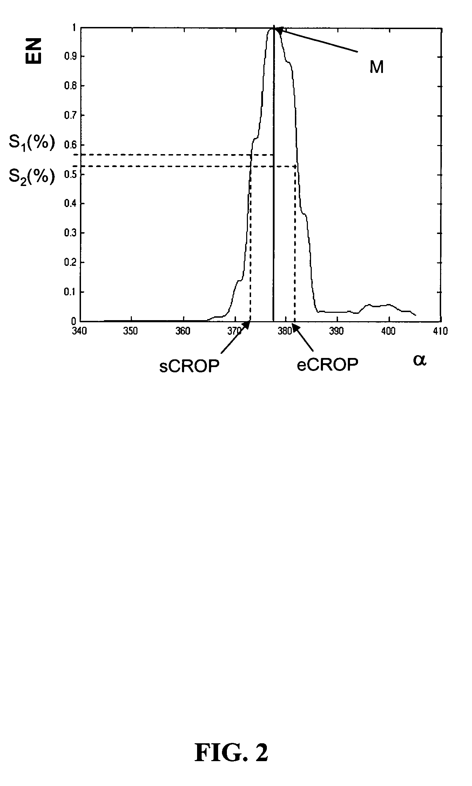

La distribution de la somme de l'énergie des composantes spectrales, suivant le temps ou l'angle vilebrequin, possède une allure caractéristique. Ainsi, une augmentation puis une diminution de cette énergie est corrélée avec le phénomène de combustion. La méthode d'extraction d'indicateurs de l'état de la combustion est basée sur la recherche du maximum de la somme de l'énergie des composantes spectrales, noté M sur la figure 2. Cette figure 2 illustre la distribution (EN) de la somme de l'énergie des composantes spectrales (normalisée) en fonction de l'angle vilebrequin (α). Une fois ce maximum identifié, quatre indicateurs sont extraits :

- le début du phénomène vibratoire associé à la phase de combustion nommé sCROP (Start of Combustion Related Oscillation Phenomenon)

- la fin du phénomène vibratoire associé à la phase de combustion nommé eCROP (End of Combustion Related Oscillation Phenomenon)

- le Barycentre énergétique du phénomène vibratoire nommé bCROP (Barycenter of Combustion Related Oscillation Phenomenon)

- la magnitude du phénomène vibratoire nommé mCROP (Magnitude of Combustion Related Oscillation Phenomenon)

Le sCROP est le temps ou l'angle correspondant à un certain seuil ($S_1(\%)$) du maximum (M) de la somme de l'énergie des composantes spectrales, situé avant le maximum. Ainsi une fois le maximum déterminé et à partir d'un pourcentage fixé de ce maximum, la datation temporelle ou angulaire de la somme de l'énergie des composantes spectrales atteignant cette valeur fixe le paramètre sCROP.

Le eCROP est le temps ou l'angle correspondant à un certain seuil ($S_2(\%)$) du maximum de la somme de l'énergie des composantes spectrales situé après le maximum. Ainsi une fois le maximum déterminé, à partir d'un pourcentage fixé de ce maximum la datation temporelle ou angulaire de la somme de l'énergie des composantes spectrales atteignant cette valeur fixe le paramètre eCROP.

Le bCROP est le temps ou l'angle compris dans l'intervalle fixé par le sCROP et le eCROP, et correspondant à la position du barycentre de la courbe EN (distribution de l'énergie) selon la relation suivante:

$$bCROP = \frac{\sum energy(n)*dat(n)}{\sum energy(n)}$$

Où *energy(n)* est l'énergie de la somme des énergies des composantes spectrales *dat(n)* est la datation temporelle ou angulaire.

Le mCROP est une valeur d'énergie calculée à partir de la somme de l'énergie des composantes spectrales entre sCROP et eCROP.

Pour cet exemple de réalisation, nous nous sommes placés dans le cadre d'une synthèse de l'information par une somme de l'énergie des composantes spectrales. De ce fait, nous avons déterminer un extremum qui était le maximum de cette courbe d'énergie. On ne sortirait pas du cadre de l'invention si, choisissant une combinaison différente des composantes spectrales pour synthétiser l'information, on identifier un minimum pour déterminer les indicateurs de l'état de combustion. L'intérêt de l'invention étant de choisir un point remarquable sur la courbe, permettant de déterminer des indicateurs peu sensibles au bruit.

Étape 5- Ajustement des paramètres du moteur pour réguler la combustion.

C'est en se basant sur la combinaison, entre autres, de ces quatre indicateurs de l'état de la combustion que la mise en oeuvre de stratégies de commande en boucle fermée est possible. Ils permettent d'identifier des dérives de comportement des cylindres et une action corrective adaptée peut être menée afin de réguler ces dérives de comportement. La problématique du contrôle des moteurs multicylindres est souvent liée à des déséquilibres cylindre à cylindre que les contrôleurs basés sur des cartographies ne peuvent résoudre. En effet, une cartographie de base est appliquée pour chacun des cylindres sans tenir compte d'éventuelles variations. La régulation en boucle fermée apporte un terme correctif supplémentaire et adapté à la combustion dans chaque cylindre. Les dérives cylindre à cylindre peuvent avoir plusieurs origines :

- une mauvaise répartition de la masse de gaz brûlé,

- une variation de la thermique cylindre à cylindre,

- un défaut d'injection pilote due à une dérive de l'actionneur.

Les phénomènes cités précédemment forment un faisceau de vecteurs altérant à la fois le rendement de la combustion et l'agrément en terme de bruit et de vibrations. On peut noter que la variation de la combustion peut aussi modifier le profil de la combustion et qu'alors, les valeurs de réglage contenues dans les cartographies d'injections sont caduques. Les indicateurs de l'état de la combustion sont utilisés pour compenser des variations des caractéristiques du carburant ou des déséquilibres cylindre à cylindre.

A titre d'exemple, voici deux stratégies de contrôle à partir d'indicateurs de l'état de la combustion.

*Asservissement du bruit.* Le bruit généré par la combustion peut, s'il dépasse certaines valeurs limites, affecter l'agrément du véhicule, et doit respecter certaines normes environnementales. L'asservissement de la masse de carburant introduite, par exemple lors d'une injection pilote influe sur ce bruit. Il est aussi possible de modifier l'instant du début de combustion en faisant varier la masse de gaz brûlé réintroduite dans le cylindre. Dans ce cas, c'est le paramètre mCROP qui informe sur le niveau de bruit de chaque cylindre, c'est donc le paramètre idéal pour envisager une commande par rétroaction.

*Réglage du phasage de la combustion.* Le phasage de la combustion est une composante primordiale car elle entre en ligne de compte dans l'optimisation du rendement de la combustion et des émissions polluantes. Dans ce cas précis, le sCROP, le bCROP et le mCROP sont des candidats idéaux pour envisager un bouclage de l'avance à l'injection puisqu'ils sont représentatifs du phasage de la combustion.

**Exemple d'application**

Un moteur quatre cylindres en ligne a été instrumenté avec un capteur accélérométrique positionné sur le bloc moteur. Une plateforme permet de réaliser l'acquisition et le traitement en ligne des données.

*Détermination de la bande de fréquence d'intérêt*

A l'aide d'une analyse temps-fréquence, on détermine que la bande de fréquence associée au phénomène de combustion est située entre 0 et 2 kHz.

*Application de la méthodologie et résultats*

La méthodologie est appliquée en utilisant les paramètres suivants :

| Paramètres | Valeurs |
|---|---|
| Fréquences de coupure du filtre | 0 et 2.5 kHz |
| nombre d'échantillons $N$ de la fenêtre d'analyse | 48 points |
| Fréquences discrètes considérées $k$ | 1 |
| seuil d'extraction sCROP | 10 % |
| seuil d'extraction eCROP | 10 % |

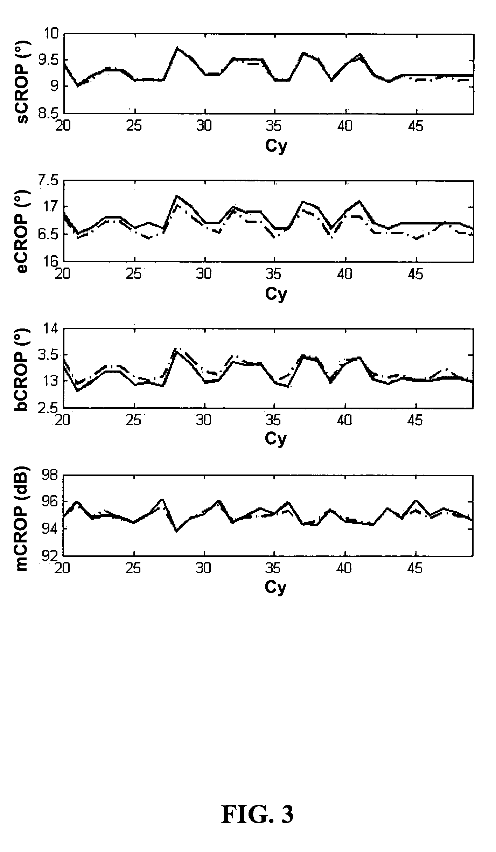

Afin de s'assurer de la validité des indicateurs extraits à partir du signal accélérométrique, la méthodologie a également été appliquée au signal de pression cylindre qui est considéré comme le signal de référence par les experts. La figure 3 présente les indicateurs obtenus à partir du signal de pression (trait continu) et du signal accélérométrique (trait en pointillé) pour un régime du moteur à 1500 tours par minute. La valeur de ces indicateurs (valeur d'angle vilebrequin sur la figure 3) est représentée en fonction du cycle moteur (Cy) sur la figure 3. On peut constater que les valeurs obtenues pour ces indicateurs sont très proches et que l'on peut donc s'affranchir de l'utilisation du capteur de pression.

La méthode selon l'invention a été exposée en prenant pour exemple le traitement de signaux vibratoires. Il s'avère qu'elle peut également être exploitée en utilisant d'autres types de signaux associés au phénomène de combustion tels que la pression enregistrée au sein du cylindre ou encore des signaux de courant d'ionisation, qui comportent des composantes oscillantes.

## Avantage de l'invention.

La méthode proposée permet d'accéder en temps réel à un ensemble d'indicateurs de l'état de la combustion sans avoir recours à la mesure directe de la pression cylindre avec un capteur d'instrumentation onéreux. Ainsi, à l'issue d'un cycle moteur, les indicateurs de l'état de la combustion sont disponibles et peuvent être exploités pour faire un diagnostic du cycle écoulé sur le cylindre considéré, puis pour modifier (si nécessaire) les paramètres d'injections afin de garantir la stabilité de la combustion suivante, pour n'importe quel cylindre, et sa conformité par rapport au point de référence (initiation de la réaction, durée de combustion et bruit par exemple). La méthode possède des avantages indispensables à un contrôle moteur efficace.

- La méthode est indépendante du type d'échantillonnage des données acquises (échantillonnage angulaire, échantillonnage temporel).

- La méthode ne s'appuie sur aucune hypothèse de périodicité du phénomène de combustion. Ainsi, l'aspect aléatoire du phénomène de combustion qui est avéré peut être parfaitement appréhendé.

- La méthode d'extraction des indicateurs de l'état de la combustion à partir de l'analyse temps-fréquence est une méthode axée sur le maximum du phénomène de combustion. Elle ne réalise par d'intégration d'énergie sur toute une fenêtre angulaire centrée sur la combustion. Ainsi, la méthode d'extraction s'avère peu sensible aux bruits et fournit des indicateurs de l'état de la combustion très similaires à ceux que l'on pourrait obtenir avec le signal de référence qui est le signal de pression cylindre.

- La méthode proposée est rapide car elle nécessite peu d'opérations temps réel, ainsi l'analyse temps-fréquence qui détermine l'énergie d'une fréquence pour un échantillon donné ne nécessite que quatre opérations élémentaires.

- Enfin, en raison de sa simplicité, les indicateurs sont peu nombreux et très simples à déterminer.

L'analyse temps-fréquence de la méthode, réalisée échantillon par échantillon (par opposition au calcul de la FFT sur un ensemble déjà acquis d'échantillons), ne nécessite que très peu d'opérations car on ne s'intéresse qu'à un nombre limité de fréquences contrairement à ce qui est fait classiquement avec la transformée de Fourier rapide qui calcule toutes les fréquences du signal. On rappelle que l'analyse fréquentielle d'un signal peut se révéler coûteuse en terme de temps de calcul et inadéquate pour le traitement en temps réel. Ici, la méthode proposée est à la fois précise et rapide. De plus, on peut associer à la formulation récursive de l'analyse temps-fréquence réalisée un filtrage fréquentiel lui aussi récursif. La méthode proposée est donc très performante dans un environnement temps réel où la rapidité de calcul et l'espace mémoire sont des paramètres essentiels.

De plus, la méthode selon l'invention ne dépend pas de la nature de la combustion ou de la technologie du capteur utilisé. Les paramètres de réglages assurent une bonne adaptabilité de la méthode à diverses configurations moteur/capteur.

## Revendications

1. Méthode pour déterminer des indicateurs de l'état de la combustion d'un moteur à combustion interne, dans laquelle on acquiert sous forme d'une série d'échantillons un signal corrélé au phénomène de combustion, on détermine une bande de fréquence corrélée avec ladite combustion en réalisant une analyse temps-fréquence dudit signal, on sélectionne un nombre $k$ de fréquences appartenant à ladite bande de fréquence, la méthode étant **caractérisée en ce que** l'on réalise les étapes suivantes :

   a) après acquisition d'une première séquence de $N$ premiers échantillons $[n_1,...n_N]$ :

- on filtre ladite première séquence dans ladite bande de fréquence, à l'aide d'un filtre passe bande ;
- on estime au moins $k$ composantes spectrales de ladite première séquence ainsi filtrée en effectuant une transformée de Fourier discrète de la première séquence filtrée;

b) puis, à chaque nouvel échantillon $n_{N+1}$,

- on construit une nouvelle séquence de $N$ échantillons $[n_2,.....n_{N+1}]$, constituée des échantillons de la dite première séquence à l'exception du premier échantillon $n_1$ et avec en plus ledit nouvel échantillon $n_{N+1}$ ;
- on filtre ladite nouvelle séquence dans ladite bande de fréquence, à l'aide d'un filtre passe bande récursif ;
- on estime au moins $k$ composantes spectrales de ladite nouvelle séquence ainsi filtrée, à l'aide d'une transformée de Fourier discrète de la nouvelle séquence filtrée, calculée en appliquant la propriété de décalage circulaire de ladite transformée de Fourier ;

c) on détermine des indicateurs de l'état de la combustion à partir desdites composantes spectrales estimées.

2. Méthode selon la revendication 1, dans laquelle on détermine lesdits indicateurs de l'état de la combustion après acquisition d'un nombre $p$ de séquences, à partir des étapes suivantes :

- on définit, pour chaque séquence, une valeur combinant les composantes spectrales ;
- on détermine un extremum des $p$ valeurs combinant les composantes spectrales des $p$ séquences ;
- on détermine lesdits indicateurs de l'état de la combustion à partir dudit extremum.

3. Méthode selon la revendication 2, dans laquelle ladite valeur combinant les composantes spectrales correspond à la somme de l'énergie des composantes spectrales d'une séquence.

4. Méthode selon l'une des revendications 1 à 3, dans laquelle on acquiert ledit signal en fonction du temps.

5. Méthode selon l'une des revendications 1 à 3, dans laquelle on acquiert ledit signal en fonction de l'angle vilebrequin.

6. Méthode selon l'une des revendications précédentes, dans laquelle le nombre $k$ de fréquences sélectionnées est compris entre 1 et 10.

7. Méthode selon l'une des revendications 1 à 6, dans laquelle ledit signal est un signal vibratoire acquis à l'aide d'un capteur de vibration placé dans ledit moteur.

8. Méthode selon l'une des revendications 1 à 6, dans laquelle ledit signal est la pression au sein de cylindres dudit moteur acquis à l'aide de capteurs de pression placés dans ledit moteur.

9. Méthode selon l'une des revendications 1 à 6, dans laquelle ledit signal est un signal de courant d'ionisation.

10. Méthode selon la revendication 7, dans laquelle lesdits indicateurs de l'état de la combustion représentent au moins l'un des phénomènes suivants : le début du phénomène oscillant associé à la phase de combustion, la fin du phénomène oscillant associé à la phase de combustion, le barycentre énergétique du phénomène oscillant, la magnitude du phénomène oscillant.

11. Méthode selon l'une des revendications précédentes, dans laquelle on modifie des paramètres moteurs en fonction desdits indicateurs de l'état de la combustion, pour contrôler la combustion dudit moteur.

**FIG. 1**

**FIG. 2**

**FIG. 3**

**Office européen**
**des brevets**

**RAPPORT DE RECHERCHE EUROPEENNE**

Numéro de la demande

EP 07 29 0920

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| D,Y | DE 102 01 073 A1 (SIEMENS AG [DE]) 31 juillet 2003 (2003-07-31) * abrégé * * alinéas [0003] - [0005] * * alinéa [0712] * & FR 2 834 789 A (SIEMENS AG) 18 juillet 2003 (2003-07-18) ----- | 1-11 | INV. F02D35/02 F02D41/14 G01L23/22 |
| Y | JP 11 303673 A (DENSO CORP) 2 novembre 1999 (1999-11-02) * abrégé * ----- | 1-11 | |
| D,Y | ERIC JACOBSEN, RICHARD LYONS: "The sliding DFT" IEEE SIGNAL PROCESSING MAGAZINE, vol. 20, no. 03, mars 2003 (2003-03), pages 74-80, XP002427289 ISSN: 1053-5888 * le document en entier * ----- | 1-11 | |
| A | FR 2 844 302 A1 (INST FRANCAIS DU PETROL [FR]) 12 mars 2004 (2004-03-12) * abrégé * * page 1, ligne 1 - page 4, ligne 29 * ----- | 1-11 | DOMAINES TECHNIQUES RECHERCHES (IPC)  F02D G01L |
| A | US 6 246 952 B1 (HONDA TAKAYOSHI [JP]) 12 juin 2001 (2001-06-12) * abrégé * * colonne 1, ligne 6 - colonne 2, ligne 41 * ----- | 1-11 | |
| A | WO 03/001175 A (ENGINES PDM LTD [IL]; DEBOTTON GAL [IL]; SHER ERAN [IL]) 3 janvier 2003 (2003-01-03) * abrégé * * page 1, ligne 1 - page 16, ligne 28 * ----- | 1-11 | |

Le présent rapport a été établi pour toutes les revendications

| Lieu de la recherche | Date d'achèvement de la recherche | Examinateur |
|---|---|---|
| Munich | 25 septembre 2007 | Wettemann, Mark |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 29 0920

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-09-2007

| Document brevet cité au rapport de recherche | | Date de publication | Membre(s) de la famille de brevet(s) | | Date de publication |
|---|---|---|---|---|---|
| DE 10201073 | A1 | 31-07-2003 | FR<br>US | 2834789 A1<br>2003164156 A1 | 18-07-2003<br>04-09-2003 |
| FR 2834789 | A | 18-07-2003 | DE<br>US | 10201073 A1<br>2003164156 A1 | 31-07-2003<br>04-09-2003 |
| JP 11303673 | A | 02-11-1999 | AUCUN | | |
| FR 2844302 | A1 | 12-03-2004 | AUCUN | | |
| US 6246952 | B1 | 12-06-2001 | AUCUN | | |
| WO 03001175 | A | 03-01-2003 | EP<br>US | 1407244 A1<br>2004236494 A1 | 14-04-2004<br>25-11-2004 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1116946 A
- US 2004267430 A
- WO 05001263 A
- DE 19536110
- FR 2739414
- US 6546328 B
- FR 2834789

- US 6388444 B
- US 6456927 B
- US 20040162668 A
- US 20060085119 A
- US 6976936 B
- US 20040267430 A
- US 6408819 B

**Littérature non-brevet citée dans la description**

- Spark advance modeling and control. **L. ERIKSSON.** Ph.D. thesis. Linkôping University, 1999
- **S. J. CITRON ; J. E. O'HIGGINS ; L. Y. CHEN.** Cylinder by cylinder engine pressure and pressure torque waveform determination utilizing speed fluctuations. *SAE Paper,* 1989, (890486
- **Y. GAO ; R. B. RANDALL.** Reconstruction of Diesel engine cylinder pressure using a time domain smoothing technique. *Mechanical Systems and Signal Processing,* 1999, vol. 13 (5), 709-722
- **H. DU ; L. ZHANG ; X. SHI.** Reconstructing cylinder pressure from vibration signals based on radial basis function networks. *Proceedings of the Institution of Mechanical Engineers, Part D,* 2001, vol. 215, 761-767

- **R. JOHNSSON.** Cylinder pressure reconstruction based on complex radial basis function networks from vibration and speed signals. *Mechanical Systems and Signal Processing,* 2006
- **OPPENHEIM ; SCHAFER.** *Discrete-Time signal processing,* 1989
- **T. NODES ; N. GALLAGHER.** Median filters : Some modifications and their properties. *IEEE Transactions on Acoustics, Speech and Signal Processing,* 1982, vol. 30 (5), 739-746
- **I. SHMULEVICH et al.** Output distributions of recursive stack filters. *Signal Processing letters,* Juillet 1999, vol. 6 (7), 175-178
- **JACOBSEN E ; LYONS RICHARD.** The sliding DFT. *IEEE Signal Processing Magazine,* Mars 2003, 74-80